# EUROPÄISCHE PATENTSCHRIFT

(11) **EP 1 115 087 B1**
(45) Veröffentlichungstag und Bekanntmachung des Hinweises auf die Patenterteilung: **05.11.2008**
(21) Anmeldenummer: 00127594.0
(22) Anmeldetag: 15.12.2000
(51) Int. Cl.: G06K 19/077

(54) **Verfahren zur Herstellung einer Transponderanordnung**
Method for the production of a transponder arrangement
Méthode de fabrication d'un dispositif transpondeur

(30) Priorität: 21.12.1999 DE 19962077
(43) Veröffentlichungstag der Anmeldung: 11.07.2001
(73) Patentinhaber: AEG Identifikationssysteme GmbH, 89077 Ulm (DE)
(72) Erfinder: Baeger, Holm, Dr., 89134 Blaustein (DE)
(74) Vertreter: Weber, Gerhard

(56) Entgegenhaltungen:
- EP-A- 0 694 872
- EP-A- 0 947 952
- WO-A-98/39989
- FR-A- 2 739 587

## Beschreibung

Die Erfindung betrifft ein Verfahren zur Herstellung einer Transponderanordnung.

Bei Transponderanordnungen ist typischerweise der Transponder selbst, welcher wenigstens eine Antennenspule und einen elektrischen Schaltkreis umfaßt, durch Verkapselung gegen Umgebungseinflüsse geschützt. Eine solche Verkapselung kann beispielsweise in Form einer Glasampulle gegeben sein.

Mechanisch stabilere Ausführungen kapseln die Transponder in plastischen Kunststoffen oder Epoxi-Harz. Für die für viele Anwendungen vorteilhafte flache Bauform von Transponderanordnungen ist es beispielsweise bekannt, einen den Transponder enthaltenden Trägerfilm beidseitig durch mehrere Epoxiharz-Folienlagen einzuschließen und die Schichtfolge durch Verpressen, evtl. bei höherer Temperatur fest zu verbinden. Für eine andere bekannte flache Bauform werden zwei Halbschalen aus Kunststoff vorgefertigt die mit einem Überschuß an Klebstoff unter Zwischenfügung des Transponders zusammengefügt und verklebt werden.

Bei einem aus der DE 197 10 656 A1 bekannten Verfahren wird in einer Kernfolie eine Struktur ausgestanzt, deren Form der Transponderanordnung entspricht. Die Kernfolie wird mit einer Basisfolie laminiert. Der ausgestanzte Bereich wird mit einer verfestigbaren Flüssigkeit gefüllt und nach Einlegen der Transponderanordnung in den eingestanzten Bereich wird eine Deckfolie auflaminiert.

Die DE 198 54 986 A1 beschreibt ein Verfahren zur Herstellung von Karten mit eingebetteter Elektronik, wobei in einem ersten Kartenteil durch Prägung eine vertiefte Struktur zur Aufnahme der Elektronik erzeugt und die in die Struktur eingelegte Elektronik durch wenigstens eine weitere Folienlage abgedeckt wird und so die Elektronik einschließt.

Aus der DE 8 909 783 U1 ist eine Anordnung mit der Funktion eines Transponders zur berührungslosen Identifikation beschrieben, wobei die Elektronik in einem einzigen Formschritt vollständig von einem Plastikmaterial nahtlos umschlossen wird. Die Elektronik wird hierzu in ein Formwerkzeug eingesetzt und hat dabei einen allseitigen Abstand zu den Wänden des Werkzeugs. Die Elektronik ist im Formwerkzeug über Fixierstifte gehalten. Nach Zuführen des Vergußmaterials und vor dessen Verfestigung werden die Zentrierstifte zurückgezogen und das noch fließfähige Vergußmaterial schließt die von den Zentrierstiften hinterlassenen Kanäle.

In der EP 0 692 770 A1 ist die Herstellung einer kontaktlosen Chipkarte beschrieben, welche als Elektronik einen integrierten Schaltkreis und eine Antennenspule enthält. Die Herstellung erfolgt nach einem Kunststoff-Einspritzverfahren, bei welchem zwischen zwei Werkzeughälften eine Kammer mit Kunststoffmaterial unter hohem Druck ausgefüllt wird. Die Verfahren sind damit dem bei der vorliegenden Erfindung gewählten Verfahren gleich oder zumindest ähnlich. Eine erste Verfahrensvariante sieht vor, in ein erstes Werkzeug die Elektronik (Antenne mit kontaktiertem Chip) einzulegen, wobei eine Werkzeughälfte eine Vertiefung zur lagesicheren Aufnahme der Elektronik enthalten kann, und in einem ersten Gießschritt eine Kartenhälfte herzustellen, welche dann die Elektronik bereits an einer ihrer Oberflächen enthält. Durch Wechseln einer Werkzeughälfte, wobei die erste Kartenhälfte in der anderen Werkzeughälfte verbleiben kann, wird in einem zweiten Gießschritt die zweite Lage der Karte hergestellt. Es entsteht dabei ein homogener Kartenkörper, welcher in der Mitte die Elektronik einschließt. In einer anderen Verfahrensvariante wird die Elektronik auf einem Träger, beispielsweise einer Plastikfolie vormontiert und in das Werkzeug eingelegt. Die Plastikfolie kann dabei bereits eine Außenschicht des späteren Kartenkörpers bilden. In einem einzigen Gießschritt wird die die Elektronik tragende Seite der Ausgangsfolie mit Plastikmaterial vergossen und damit der Kartenkörper hergestellt. Die Ausgangsfolie kann auch bereits eine Reliefstruktur aufweisen, welche die Antenne mit Chip lagerichtig aufnimmt.

In der EP 0 947 952 A2 ist ein Verfahren zur Herstellung eines Datenträgers gemäß dem Oberbegriff des Anspruchs 1 beschrieben, bei welchem zunächst ein erstes Formteil hergestellt und eine Transponderanordnung in ein solches erstes Formteil eingelegt wird. Anschließend wird das erste Formteil mit der Transponderanordnung in ein Formwerkzeug eingelegt, in welchem auf der die Transponderanordnung tragenden Seite und teilweise am Außenrand des ersten Formteils ein freies Volumen vorliegt. Das freie Volumen wird mit gießfähigem Material ausgefüllt, wobei die Transponderseite des ersten Formteils und die teilweise freien vertikalen Seitenwände mit dem gießfähigen Material umflossen werden.

In der vorliegenden Erfindung liegt die Aufgabe zugrunde, ein Verfahren zur Herstellung einer mechanisch weiter verbesserten Transponderanordnung anzugeben.

Die Erfindung ist im Patentanspruch 1 beschrieben. Die abhängigen Ansprüche enthalten vorteilhafte Ausgestaltungen und Weiterbildungen der Erfindung.

Die Erfindung erzielt mit der vorteilhaften Herstellung des den Transponder eingeschlossen enthaltenden Körpers aus gießfähigem Material eine Transponderanordnung, welche einen mechanisch verstärkten Zusammenhalt der in den aufeinanderfolgenden Formschritten erzeugten Teilvolumina der Transponderanordnung und damit auch einen verbesserten Schutz des eingeschlossenen Transponders zeigt. Der Transponder kann dabei bereits bei der Herstellung des ersten Formteils in das erste Werkzeug eingelegt und in das erste Formteil an oder dicht unter dessen Oberfläche eingeschlossen sein oder nach dem ersten Formschritt in das erste Formteil eingelegt werden.

Gemäß einer bevorzugten Ausführungsform wird in einem ersten Schritt ein Einlegeteil erzeugt, welches eine Innenfläche mit einer Reliefstruktur aufweist.

Unter Innenfläche sei hierbei eine Fläche verstanden welche im Endprodukt, der vollständigen gekapselten Transponderanordnung nicht als Außenfläche in Erscheinung tritt. Die Reliefstruktur weist Aufnahmen für ein definiertes und seitlich lagegesichertes Einlegen des Transponders auf. Die Aufnahmen umfassen insbesondere eine Ringaufnahme für eine Transponderringspule sowie eine innerhalb des von der Ringaufnahme umschlossenen Zentrums eine Kammer für eine elektronische Schaltung, welche auch allein durch einen Halbleiterchip gebildet sein kann. Die Aufnahmen sind vorzugsweise als Vertiefung ausgebildet, können aber auch als erhöhte Stege, Stifte oder Leisten ausgeführt sein.

Das Einlegeteil wird gemäß einer vorteilhaften Ausführung zur Herstellung einer scheibenförmig flachen Transponderanordnung gleichfalls als flache Scheibe hergestellt, deren maximale Wandstärke gemessen senkrecht zur Scheibenfläche gering ist gegen die Querausdehnung des Einlegeteils. Die Wandstärke ist im Bereich der Aufnahmen im Einlegeteil vorzugsweise nochmals deutlich, insbesondere um wenigstens 30% gegen die maximale Wandstärke reduziert. Insbesondere bei der Aufnahme für die Ringspule ist die weitere deutliche Reduzierung der Wandstärke von Vorteil, da hierdurch für den Spulenquerschnitt mehr Raum senkrecht zur Scheibenfläche zur Verfügung steht auch bei durch Drahtdurchmesser und Windungszahl gegebenem Spulenquerschnitt der innere Ringdurchmesser der Spule größer gewählt werden kann als bei sehr flachem Spulenquerschnitt.

Das Einlegeteil weist vorteilhafterweise am Rand der Innenfläche zu der der Innenfläche abgewandten Oberfläche einen Eingang mit gegenüber dem Außenumfang reduziertem Umfang auf. Dieser kann in einem zweiten Formschritt vorteilhafterweise von gießbarem Material umgossen werden und eine besonders stabile mechanische Verzahnung des Einlegeteils in dem gießbaren Material bewirken. Der Einzug ist vorzugsweise als den Umfang monoton verengend, insbesondere gestuft oder vorzugsweise als Schrägfläche, ausgeführt, was eine besonders einfache Herstellung des Einlegeteils zwischen zwei Hälften eines ersten Formwerkzeugs ermöglicht.

An dem Einlegeteil wird vorteilhafterweise im ersten Formschritt wenigstens eine Zentrierkontur erzeugt, welche in einem folgenden Verfahrensschritt, insbesondere einen zweiten Formschritt mit teilweisem Umgießen des Einlegeteils, das Einlegeteil in definierter Position hält. Gemäß einer ersten vorteilhaften Ausführung wird die Zentrierkontur als eine zentrale Aussparung im Einlegeteil erzeugt. Eine weitere vorteilhafte Ausführungsform sieht mehrere Abstandsstege am Einlegeteil als Teile der Zentrierkontur vor. Diese stützen sich bei einem zweiten Formschritt an Wandungen eines zweiten Formwerkzeugs ab und können bei Zufuhr von gießbarem Material von diesem umflossen und eingeschlossen werden.

Nach Herstellung des Einlegeteils wird der Transponder, der als elektrisch verbundene Einheit wenigstens eine Antennenringspule und einen Elektronikschaltkreis umfaßt, in die Aufnahmen des Einlegeteils eingelegt. Der Transponder oder dessen einzelne Komponenten stützen sich seitlich gegen Begrenzungen der Aufnahme ab. Soweit besonders empfindliche Bauformen von Transpondern vorliegen, beispielsweise bei Ausführungen, bei welchen der elektrische Schaltkreis aus einem gegenüber der Aufnahmekammer sehr kleinen Bauteil, insbesondere ausschließlich aus einem direkt kontaktiertem Halbleiterchip besteht, können einzelne Elemente des Transponders auch mittels eines adhesiven Materials in der Aufnahme fixiert werden. Beispielsweise kann ein Halbleiterchip mittels eines Vergußmaterialtropfens in top-dome-Art befestigt und geschützt sein.

Das Einlegeteil mit dem in der Aufnahme eingelegten und ggf. zusätzlich befestigten Transponder wird in ein zweites Formwerkzeug eingesetzt, welches in seiner vollständigen, d.h. typischerweise nach dem Einsetzen des Einlegeteils geschlossener Form wenigstes auf der dem Einlegeteil abgewandten Seite des eingelegten Transponders ein freies Volumen aufweist. Vorzugsweise ist ein freies Volumen auch am Rand der Innenfläche des Einlegeteils, insbesondere an dessen Äußeren Umfang und an einem dort vorteilhafterweise vorgesehenen Umfangs-Einzug zu der der Innenfläche abgewandten Fläche hin vorhanden.

In einem zweiten Formschritt wird das freie Volumen des zweiten Formwerkzeuges durch Zuführung von gießbarem Material ausgefüllt, wobei dieses Material sowohl das Einlegeteil als auch die unregelmäßigen Formen des Transponders umfließt und auch hinterfließt. Unter gießbarem Material sei hierbei ein an sich a priori beliebiges Material verstanden, welches bei den Bedingungen des gewählten Gießverfahrens fließfähig ist und sich den Begrenzungen des Formwerkzeugs und dem Einlegeteil mit Transponder anpaßt. Das Material ist nur während des Formschritts als fließfähig zu betrachten und ist am fertigen Produkt der Transponderanordnung formstabil.

Vorzugsweise ist als Material ein Duroplast gewählt. Als Verfahren für den zweiten Formschritt ist im Transfer-Molding-Verfahren bevorzugt. Vorteilhafterweise sind sowohl Material als auch Verarbeitungsverfahren im ersten und zweiten Formschritt gleich, so daß eine besonders hohe Übereinstimmung der nacheinander hergestellten Teilvolumina der fertigen Transponderanordnung des Einlegeteils mit dem im zweiten Formschritt zugeführten Material entlang der Berührungsflächen eintritt.

Beim Zuführen des gießbaren Materials im zweiten Formschritt stützt sich der Transponder gegen eventuell auftretende seitliche Verschiebungskräfte des Materialflusses gegen die Begrenzungen der Aufnahme im Einlegeteil und das Einlegeteil über Zentrierkontur gegen Wandungen des zweiten Formwerkzeugs ab, so daß der Transponder im Formwerkzeug eine vorbestimmte Position beibehält.

Die Erfindung ist nachfolgend anhand bevorzugter Ausführungsbeispiele unter Bezugnahme auf die Abbildungen noch eingehend veranschaulicht. Dabei zeigt:
- Fig. 1: ein Einlegeteil in Draufsicht auf dessen Innenfläche
- Fig. 2: das Einlegeteil nach Fig. 1 im Querschnitt
- Fig. 3: das Einlegeteil in einer Gußform

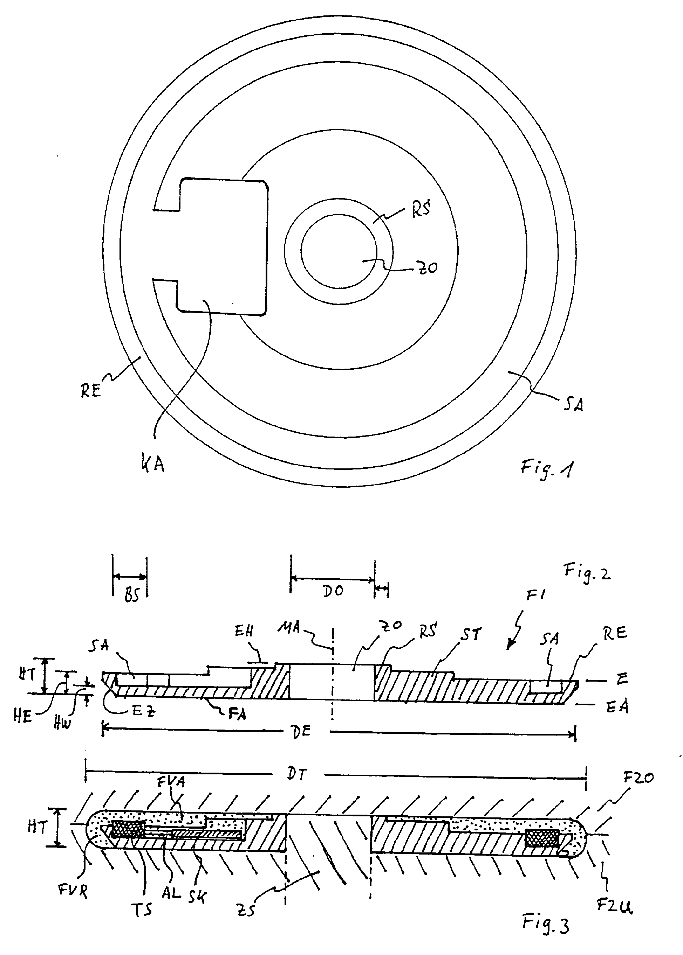

In Fig. 1 ist in Draufsicht ein in einem ersten Formschritt zu fertigendes, im Beispielsfall kreisrundes Einlegeteil mit Außendurchmesser DE skizziert. Die sichtbare Innenfläche Fl des Einlegeteils weist eine Reliefstruktur auf, in welcher insbesondere eine kreisringförmige Spulenaufnahme SA für eine Transponderringspule und eine Kammer KA als Aufnahme für einen elektrischen Schaltkreis in Form von Vertiefungen ausgebildet sind. Die äußere Berandung der Spulenaufnahme SA ist mit geringem Rand RE dicht an den äußeren Umfang des Einlegeteils herangeführt, um einen großen Spulendurchmesser zu ermöglichen und dadurch eine hohe Feldkopplung zu erzielen. Die innere Berandung der Spulenaufnahme SA bzw. deren Ringbreite BR kann nach der Breite der zum Einlegen vorgesehenen Transponderspule dimensioniert sein. Vorteilhafterweise kann ein und dasselbe Einlegeteil für verschiedene Transponder vorgesehen sein, deren Ringspulen vorzugsweise gleiche Außendurchmesser und ggf. unterschiedliche Ringbreiten aufweisen, wobei die Spulenaufnahme SA dann für die Ringspule mit der größten Ringbreite dimensioniert ist. Die Positionsstabilität durch Abstützung an der Berandung der Spulenaufnahme ist dabei auch für Ringspulen geringerer Ringbreite nicht beeinträchtigt.

Für die Kammer KA gilt entsprechend, daß deren Größe auf die Größe eines vorgesehenen elektrischen Schaltkreises eines Transponders abgestimmt sein kann. Bei Verwendung desselben Einlegeteils für Transponder mit unterschiedlich großen Schaltkreisen ist die Kammer für den maximal benötigten Raum dimensioniert. Insbesondere für wesentlich kleinere elektrische Schaltkreisen kann vorteilhafterweise vorgesehen sein, diese nach dem Einlegen in das Einlegeteil zusätzlich zu fixieren, um beispielsweise ein Abreißen der Verbindungsdrähte zur Ringspule durch im zweiten Formschritt eventuell auftretende Verschiebungskräfte zu verhindern. Die Fixierung kann insbesondere durch Einkleben erfolgen, wobei besonders kleine elektrische Schaltkreise insbesondere in Form von Halbleiterchips auch durch das Klebematerial umgossen und geschützt werden können.

Im Zentrum des Einlegeteils ist eine zentrale, insbesondere eine kreisrunde Öffnung ZO erzeugt, welche vorteilhafterweise Teil einer Zentrierkontur ist und in einem weiteren Verfahrensschritt zur seitlichen zentrierten Positionierung des Einlegeteils dienen kann. Die zentrale Öffnung kann günstigerweise auch in den weiteren Herstellungsschritten der Transponderanordnung geöffnet bleiben und zur Befestigung der Transponderanordnung an einem Objekt dienen. Ein Ringsteg RS kann als weiterer Teil der Zentrierkontur eine Abstützung des Einlegeteils senkrecht zur Innenfläche bewirken.

Wie aus Fig. 2 ersichtlich ist das Einlegeteil gemäß einer bevorzugten Ausführung als flache Scheibe erzeugt und ermöglicht dadurch die Herstellung einer besonders flachen und damit an Objektoberflächen eng anliegenden Transponderanordnung. Die flache Form ist auch günstig hinsichtlich des prinzipiellen Aufbaus eines Transponders mit einer Ringspule.

In Fig. 2 ist für die Innenfläche Fl eine Flächenebene El definiert. Die Lage einer solchen Flächenebene ist an sich willkürlich und aus Anschaulichkeitsgründen auf die Höhe des Randbereichs RE der Innenfläche Fl gelegt. Der Innenfläche abgewandt sei eine als Außenfläche FA bezeichnete, in einer Ebene EA liegende Fläche an dem Einlegeteil erzeugt, welche senkrecht zu einer Mittelachse MA des Einlegeteils ausgerichtet ist. Die mit HE bezeichnete Dicke des Einlegeteils zwischen den Ebenen EA und El ist klein gegen den Außendurchmesser DE des Einlegeteils. Die Spulenaufnahme SA und die Kammer KA sind als Vertiefungen gegen die Fläche El in dem Einlegeteil ausgebildet. Eine Restwandstärke HW zwischen Boden der Aufnahmen SA, KA und der Außenfläche FA beträgt vorteilhafterweise wenigstens 0,2 mm. Das Einlegeteil zeigt bei der zentralen Öffnung ZO einen erhöhten Ringsteg RS mit im Beispielsfall geringer radialer Ausdehnung, der in einer Ebene EH liegt und einen Teil einer Zentrierkontur bildet, wie nachfolgend noch erläutert. Zwischen Spulenaufnahme SA und zentraler Öffnung ZO kann ferner eine Stufe ST vorgesehen sein, in welcher sich die Wandstärke des Einlegeteils und damit dessen Biegesteifigkeit erhöht. Vom Randbereich RE der Innenfläche zur Außenfläche FA hin tritt ein den Umfang bzw. Radius reduzierender Einzug EZ auf, welcher gestuft oder wie im Beispiel skizziert mit schräger Flanke verlaufen kann.

In Fig. 3 ist das Einlegeteil nach Fig. 2 mit einem eine Ringspule TS und einen mit dieser über Verbindungsdrähte AL verbunden elektrischen Schaltkreis SK enthaltenden Transponder bestückt und in ein Formwerkzeug mit zwei Formhälften F20 und F2U eingesetzt. Das Formwerkzeug weist einen zentralen Stempel ZS, beispielsweise als Teil der unteren Formhälfte F2U oder als separaten zylindrischen Stempel, wie durch unterbrochene Linien angedeutet, auf.

Das Einlegeteil wird mit seiner zentralen Öffnung ZO über diesen zentralen Stempel gesteckt und dadurch seitlich zentriert. Zentrale Öffnung ZO des Einlegeteils und zentraler Stempel weisen nicht notwendig dieselbe Querschnittsform auf, sondern es genügen mehrere ggf. schmale Berührungsflächen, so daß bei abweichenden Querschnittsformen zwischen Stempel und Rand der Öffnung ZO Durchgänge freibleiben, welche im zweiten Formschritt von zugeführtem Material gefüllt werden, wobei eine evtl. vorhandene Hinterschneidung der zentralen Öffnung zur Außenfläche FA hin eine verstärkte mechanische Verankerung bewirken kann. Durch Aufsetzen der anderen Formwerkzeughälfte wird das Formwerkzeug geschlossen und der Ringsteg RS des Einlegeteils mit der Ebene EH liegt an der Deckwandung der Formhälfte F20 an, wodurch das Einlegeteil in Richtung senkrecht zu den Ebenen EH, El, EA exakt im Formwerkzeug positioniert ist. Die als Außenfläche bezeichnete Fläche FA liege dabei auf einer ebenen Fläche der unteren Formhälfte F2U auf.

Zwischen dem Transponder( sowohl Spule TS als auch Schaltkreis SK) und der oberen Formhälfte F20 bleibt beim geschlossenen Formwerkzeug ein freies Volumen FVA. Durch einen mit DT größeren Außendurchmesser des lnnenvolumens des Formwerkzeugs gegenüber dem Durchmesser DE des Einlegeteils bleibt auch seitlich des Randes RE und des Umfangseinzugs EZ ein freies Volumen FVR im geschlossenen Formwerkzeug, welches vorteilhafterweise mit dem erstgenannten freien Volumen FVA räumlich zusammenhängt. Durch Zuführen von fließfähigem, gießbarem Material über einen nicht dargestellten Kanal des Formwerkzeugs werden die freien Volumina mit Material ausgefüllt, welches vorteilhafterweise auch den Transponder eng umfließt. Das zugeführte Material geht vorteilhafterweise eine gute Flächenverbindung mit dem vorzugsweise gleichartigen Material des Einlegeteils ein, so daß sich ein nach außen homogen präsentierender Scheibenkörper für die Transponderanordnung ergibt. Durch das Umgießen des Randbereichs RE und des Einzugs ergibt sich zusätzlich zu der Flächenbindung eine hochfeste formschlüssige Verankerung des zugeführten Materials mit dem Einlegeteil.

Die Innenfläche Fl des Einlegeteils ist nach dem zweiten Formschritt wie aus Fig. 3 ersichtlich von dem zugeführten Material bedeckt. Die der Innenfläche Fl am Einlegeteil abgewandte Außenfläche FA liegt mit ihrer in der Ebene EA liegenden Fläche an der Wandung der Gußformhälfte F2U an und wird nicht von dem zugeführten Material umflossen.

Hierdurch sind beidseitig des Tranponders die Materialschichten einteilig homogen erzeugt, so daß trotz geringer Höhe HT der Transponderanordnung die Dicke einzelner Schichten zumindest im wichtigen Bereich der Transponderaufnahmen eine Mindeststärke nicht unterschreitet und solche Abschnitte geringer Wandstärke nicht in sich zusätzlich eine Laminarstruktur aufweisen.

Die Zentrierkontur kann, insbesondere in Fällen, in denen eine Öffnung in der Scheibenfläche nicht möglich ist, oder zusätzlich zu einer solchen Öffnung, unter Erhalt der im gegebenen Beispiel angeführten Vorteile auch andere Zentriermittel, insbesondere Abstandshalter in Form von z.B. dünnen Stegen, welche von einem Hauptkörper abstehen und den Hauptkörper in der zweiten Gußform gegen eine oder mehrere Wandungen abstützen, umfassen. Solche Abstandshalterstege können insbesondere radial nach außen abstehend ausgebildet sind. Solche Stege erlauben vorteilhafterweise beispielsweise das Umfließen eines Verzahnungseinzugs wie EZ im skizzierten Beispiel. Auch an einer zentralen Öffnung können solche Abstandshalter nach innen gerichtet vorgesehen sein, welche sich dann an dem zentralen Stempel der zweiten Gußform abstützen. Die Abstandshalter können auch eine Abstützung senkrecht zur Scheibenfläche zusätzlich zu oder anstelle von dem Ringsteg RS bilden.

Die Abstandshalter können insbesondere auch so gestaltet sein, daß sie mit Ausnahme einer kleinen Abstützfläche an der Wandung vollständig von dem zugeführten Material umflossen werden.

Eine weitere vorteilhafte Maßnahme zur mechanisch festen Verankerung des Einlegeteils mit dem im zweiten Formschritt zugeführten Material besteht darin, in dem Einlegeteil unabhängig von einer Zentrierfunktion Durchbrüche zwischen Innenfläche Fl und Außenfläche FA zu erzeugen, welche vorzugsweise einen sich zur Außenfläche gestuft oder kontinuierlich, z. B. konisch erweiternden Querschnitt aufweisen. Das im zweiten Formschritt zugeführte Material fließt auch in diese Durchbrüche und bewirkt eine mechanische Verankerung des Einlegeteils mit dem zugeführten Material.

Die vorstehend und in den Ansprüchen beschriebenen sowie die den Zeichnungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar. Insbesondere bietet sich für das Querschnittsprofil des Einlegeteils eine Mehrzahl von Gestaltungsmöglichkeiten, beispielsweise kann die Stufe ST ganz entfallen. Das Einlegeteil kann auch in der zweiten Gußform so abgestützt sein, daß es bis auf wenige Abstützelemente vollständig von zugeführtem gießbarem Material umflossen wird.

## Patentansprüche

1. Verfahren zur Herstellung einer Transponderanordnung in gekapselter Bauweise mit einem wenigstens eine Ringspule (TS) und einen mit dieser kontaktierten elektrischen Schaltkreis (SK) enthaltenden Transponder, wobei
a) in einem ersten Formschritt mit einem ersten Formwerkzeug ein erstes Formteil erzeugt und mit dem Transponder verbunden wird,
b) das erste Formteil mit dem Transponder in ein zweites Formwerkzeug (F2O, F2U) eingesetzt wird, welches zusätzlich zu dem von dem ersten Formteil eingenommenen Volumenanteil ein freies Innenvolumen (FVA) aufweist, welches überwiegend auf der dem ersten Formteil abgewandten Seite des Transponders liegt und das erste Formteil auch seitlich überragt,
c) in einem zweiten Formschritt das freie Volumen (FVA) mit gießfähigem Material ausgefüllt wird,
**dadurch gekennzeichnet, dass** in dem zweiten Formschritt das erste Formteil randhintergreifend von dem gießfähigen Material umflossen wird.

2. Verfahren nach Anspruch 1, **dadurch gekennzeichnet, daß** das erste Formteil als flache Scheibe mit gegen die Querausdehnung (DE) geringer Wandstärke (HW) erzeugt wird.

3. Verfahren nach Anspruch 1 oder 2, **dadurch gekennzeichnet, daß** die Innenfläche (FI) des Einlegeteils als im wesentlichen ebene Fläche mit gegen die Querabmessung der Fläche geringen Relieftiefe erzeugt wird.

4. Verfahren nach Anspruch 1 oder 2, **dadurch gekennzeichnet, daß** das erste Formteil als Einlegeteil erzeugt und der Transponder vor dem zweiten Formschritt in das Einlegeteil eingelegt wird.

5. Verfahren nach einem der Ansprüche 1 bis 4, **dadurch gekennzeichnet, daß** im ersten Formschritt am Einlegeteil eine Zentrierkontur (ZO) erzeugt wird, welche das Einlegeteil in dem zweiten Formwerkzeug in definierter Position hält.

6. Verfahren nach Anspruch 5, **dadurch gekennzeichnet, daß** als Zentrierkontur (ZO) eine zentrale Aussparung im Einlegeteil erzeugt wird.

7. Verfahren nach Anspruch 5 oder 6, **dadurch gekennzeichnet, daß** als Zentrierkontur mehrere Abstandsstege am Einlegeteil erzeugt werden.

8. Verfahren nach einem der Ansprüche 1 bis 7, **dadurch gekennzeichnet, daß** in dem Einlegeteil wenigstens ein Durchbruch (ZO) zwischen Innenfläche (FI) und einer dieser abgewandten Außenfläche (FA) erzeugt wird.

9. Verfahren nach Anspruch 8, **dadurch gekennzeichnet, daß** der Durchbruch mit von der Innenfläche (FI) zur Außenfläche (FA) zunehmenden Querschnittsfläche erzeugt wird.

10. Verfahren nach einem der Ansprüche 1 bis 9, **dadurch gekennzeichnet, daß** wenigstens ein Teil des Transponders vor dem zweiten Formschritt im Einlegeteil zusätzlich durch adhesives Material fixiert wird.

11. Verfahren nach einem der Ansprüche 1 bis 10, **dadurch gekennzeichnet, daß** im ersten und zweiten Formschritt Materialien mit gleichem thermischen Verhalten, vorzugsweise gleiche Materialien verwandt werden.

12. Verfahren nach einem der Ansprüche 1 bis 11, **dadurch gekennzeichnet, daß** als Material ein Duroplast verwandt wird.

## Claims

1. Method for the production of a transponder arrangement of encapsulated design having a transponder which contains at least one annular coil (TS) and an electrical circuit (SK) which is contact-connected to the latter,
a) a first moulded part being produced in a first moulding step with a first mould and being connected to the transponder,
b) the first moulded part with the transponder being inserted into a second mould (F20, F2U) which, in addition to the amount of volume occupied by the first moulded part, has a free interior volume (FVA) which is predominantly on that side of the transponder which faces away from the first moulded part and also laterally projects beyond the first moulded part,
c) the free volume (FVA) being filled with castable material in a second moulding step,
**characterized in that** the castable material flows around the first moulded part so as to engage behind the edge in the second moulding step.

2. Method according to Claim 1, **characterized in that** the first moulded part is produced in the form of a flat disc having a wall thickness (HW) which is small in comparison with the transverse extent (DE).

3. Method according to Claim 1 or 2, **characterized in that** the inner surface (FI) of the insert part is produced in the form of an essentially flat surface having a relief depth which is small in comparison with the transverse dimension of the surface.

4. Method according to Claim 1 or 2, **characterized in that** the first moulded part is produced in the form of an insert part, and the transponder is inserted into the insert part before the second moulding step.

5. Method according to one of Claims 1 to 4, **characterized in that** a centring contour (ZO), which keeps the insert part in a defined position in the second mould, is produced on the insert part in the first moulding step.

6. Method according to Claim 5, **characterized in that** a central recess is produced in the insert part as the centring contour (ZO).

7. Method according to Claim 5 or 6, **characterized in that** a plurality of spacer webs are produced on the insert part as the centring contour.

8. Method according to one of Claims 1 to 7, **characterized in that** at least one opening (ZO) is produced in the insert part between the inner surface (FI) and an outer surface (FA) which faces away from the latter.

9. Method according to Claim 8, **characterized in that** the opening is produced with a cross-sectional area which increases from the inner surface (FI) to the outer surface (FA).

10. Method according to one of Claims 1 to 9, **characterized in that** at least part of the transponder is additionally fixed in the insert part by means of adhesive material before the second moulding step.

11. Method according to one of Claims 1 to 10, **characterized in that** materials having the same thermal behaviour, preferably the same materials, are used in the first and second moulding steps.

12. Method according to one of Claims 1 to 11, **characterized in that** a thermosetting plastic is used as the material.

## Revendications

1. Procédé de fabrication d'un dispositif transpondeur dans une construction encapsulée comprenant au moins une bobine annulaire (TS) et un transpondeur contenant un circuit électrique (SK) en contact avec celle-ci,
a) une première pièce façonnée étant produite dans une première étape de façonnage avec un premier outil de façonnage et reliée avec le transpondeur,
b) la première pièce façonnée étant introduite avec le transpondeur dans un deuxième outil de façonnage (F2O, F2U), lequel présente en plus de la part de volume occupée par la première pièce façonnée un volume intérieur libre (FVA) qui se trouve principalement du côté du transpondeur opposé à la première pièce façonnée et la première pièce façonnée faisant également saillie latéralement,
c) le volume libre (FVA) étant rempli de matériau moulable dans une deuxième étape de façonnage,
**caractérisé en ce que** dans la deuxième étape de façonnage le matériau moulable s'écoule autour de la première pièce façonnée en venant en prise par l'arrière du bord.

2. Procédé selon la revendication 1, **caractérisé en ce que** la première pièce façonnée est produite sous la forme d'un disque plat à faible épaisseur de paroi (HW) par rapport à la projection transversale (DE).

3. Procédé selon la revendication 1 ou 2, **caractérisé en ce que** la surface intérieure (FI) de la pièce d'insertion est produite sous la forme d'une surface essentiellement plane ayant une profondeur de relief faible par rapport à la dimension transversale de la surface.

4. Procédé selon la revendication 1 ou 2, **caractérisé en ce que** la première pièce façonnée est produite sous la forme d'une pièce d'insertion et le transpondeur est inséré dans la pièce d'insertion avant la deuxième étape de façonnage.

5. Procédé selon l'une des revendications 1 à 4, **caractérisé en ce que** lors de la première étape de façonnage, un contour de centrage (ZO) est produit sur la pièce d'insertion, lequel maintient la pièce d'insertion dans une position définie dans le deuxième outil de façonnage.

6. Procédé selon la revendication 5, **caractérisé en ce que** le contour de centrage (ZO) généré est un évidement central dans la pièce d'insertion.

7. Procédé selon la revendication 5 ou 6, **caractérisé en ce que** plusieurs nervures d'espacement sont produites sur la pièce d'insertion en tant que contour de centrage.

8. Procédé selon l'une des revendications 1 à 7, **caractérisé en ce qu'**au moins une traversée (ZO) est produite dans la pièce d'insertion entre la surface intérieure (FI) et une surface extérieure (FA) opposée à celle-ci.

9. Procédé selon la revendication 8, **caractérisé en ce que** la traversée est produite avec une section transversale qui augmente de la surface intérieure (FI) vers la surface extérieure (FA).

10. Procédé selon l'une des revendications 1 à 9, **caractérisé en ce qu'**au moins une partie du transpondeur est en plus fixé avec un matériau adhésif dans la pièce d'insertion avant la deuxième étape de façonnage.

11. Procédé selon l'une des revendications 1 à 10, **caractérisé en ce que** des matériaux ayant le même comportement thermique, de préférence les mêmes matériaux sont utilisés dans la première et dans la deuxième étapes de façonnage.

12. Procédé selon l'une des revendications 1 à 11, **caractérisé en ce que** le matériau utilisé est un plastique thermodurcissable.
